# EUROPEAN PATENT SPECIFICATION

(11) **EP 2 730 465 B1**
(45) Date of publication and mention of the grant of the patent: **01.06.2016**
(21) Application number: 12807112.3
(22) Date of filing: 29.06.2012
(51) Int. Cl.: B60R 16/02

(54) **WIRE HARNESS STRUCTURE AND ELECTRONIC CONTROL UNIT**
KABELBAUMSTRUKTUR UND ELEKTRONISCHE STEUEREINHEIT
STRUCTURE DE FAISCEAU DE CÂBLES ET UNITÉ DE COMMANDE ÉLECTRONIQUE

(30) Priority: 04.07.2011 JP 2011147875
(43) Date of publication of application: 14.05.2014
(73) Proprietor: Yazaki Corporation, Minato-ku Tokyo 108-8333 (JP)
(72) Inventor: SATAKE, Shuuji, Susono-shi Shizuoka 410-1194 (JP); AOKI, Yoshihito, Susono-shi Shizuoka 410-1194 (JP); ITO, Ken, Susono-shi Shizuoka 410-1194 (JP)
(74) Representative: Grünecker Patent- und Rechtsanwälte PartG mbB
(86) International application number: PCT/JP2012/066650
(87) International publication number: WO 2013/005661

(56) References cited:
- EP-B1- 0 051 849
- JP-A- 11 115 646
- JP-A- 2001 122 055
- JP-A- 2004 139 941
- JP-A- 2010 192 240
- US-A1- 2010 088 004
- US-B1- 6 356 826

## Description

### [Technical Field]

The invention relates to a wiring harness assembly and an electronic control system, and in particular a wiring harness assembly configured to communicatively connect a plurality of electronic devices mounted in a vehicle to an electronic control unit configured to control the plurality of electronic devices, and an electronic control system provided with the wiring harness assembly.

### [Background of the invention]

A variety of electronic devices such as an air conditioner, a wiper, and a power window are mounted in a vehicle such as an automobile, and a freight car. These electronic devices are electrically connected to an electronic control unit (i.e., ECU) including a computer by a wiring harness. Electric power, control signal and so on are transferred between the electronic devices and ECU via the wiring harness.

Conventionally, ECU is provided with an input and output portion provided for each electronic device connected thereto. A specific electrical wire is needed for each electronic device. For the reasons, as the electronic devices which should be controlled by the ECU is increased, the number of the electrical wires of the wiring harness connecting the input and output portion of the ECU, the ECU, and the electronic devices is accordingly increased. As a result, the wiring performance of the wiring harness as well as manufacture cost are decreased, and the weight of the wiring harness is increased.

These problems have been indicated by the same applicant. See JP 2008-225673 A. The wiring harness as described in JP 2008-225673A includes a joint connector (i.e., J/C) relaying the communication between the plurality of electronic devices and the ECU. In other words, the joint connector has a communication control function. This joint connector transmits control signals, which are multiplexed and serially transmitted by the ECU, to the electronic devices in parallel.

As such, the wiring harness is provided with the joint connector having the communication control function and is configured to connect the ECU and the plurality of electronic devices via the joint connector. For the reasons, the communications between the ECU and the joint connector are multiplexed, the signal wires between the ECU and the joint connector are thus standardized. As a result, the number of the electrical wires of the wiring harness needed can be decreased.

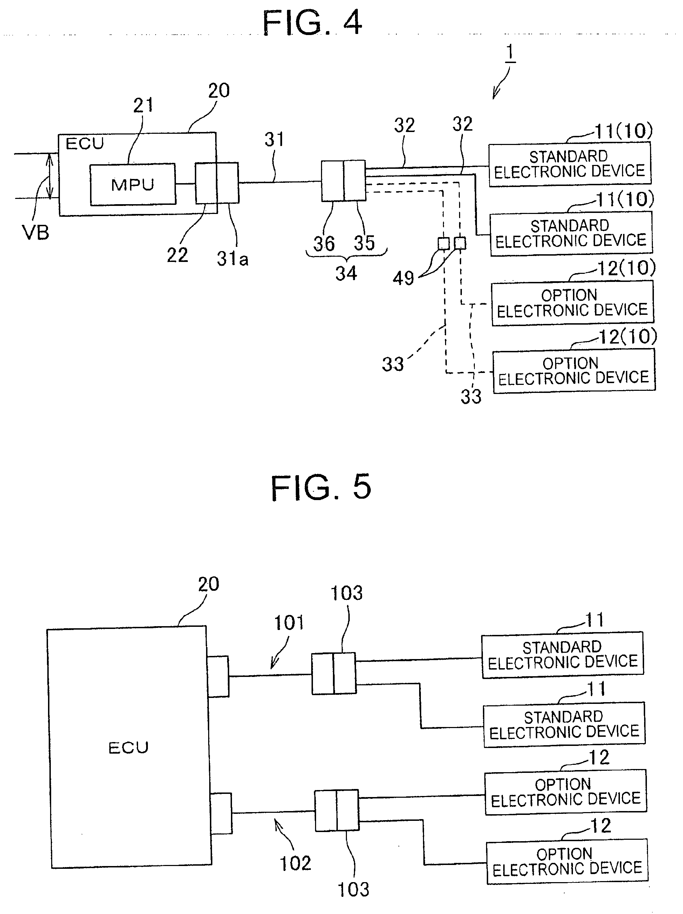

However, the vehicle is provided with, in addition to the conventionally mounted electronic devices (i.e., essential or standard electronic devices), option electronic devices which are optionally mounted in the vehicle. Referring to Fig. 5, there has been proposed an approach that a wiring harness 101 connecting ECU 20 and a standard electronic device 11 and an another wiring harness 102 connecting the ECU 20 and an option electronic device 12 are separately mounted, and each of the wiring harnesses 101, 102 is provided with a joint connector 103. In this configuration, input and output portion of the ECU 20 is also respectively needed for the standard electronic device and the option electronic device. In addition, the ECU 20 should be provided with the input and output portions in line with the combination of the electronic devices 11 and 12. and 12. For the reasons, the standardization of the ECU 20 is substantially difficult, and specific ECU 20 should be selected in accordance with the combination of the electronic devices used, thereby causing the increase of manufacture cost.

### [Citation List]

### [Patent Literature]

[PTL 1] JP 2008-225673 A Another prior art is known from document JP 11115646 A.

### [Summary of Invention]

### [Technical Problem]

In view of the above, the invention provides a wiring harness assembly in which electronic control unit is standardized, and which can be commonly used without varying or changing the number of the electrical wires even if the combination of the plurality of electronic devices to be mounted in the vehicle is changed, and an electronic device control system equipped with the wiring harness assembly.

### [Solution to Problem]

The invention is described in claims 1 and 2.

### [Advantageous Effects of Invention]

In accordance with the Invention, the joint connector is connected to both the standard wiring harness and the option wiring harness, and the associated standard electronic device and the option electronic device can be respectively controlled in accordance with the control signal, which is multiply (i.e., serially) transmitted from the electronic control unit via the first wiring harness by the control device which is incorporated in the joint connector. Accordingly, an input and output portion of the electronic control unit can be standardized regardless of presence of absence of the option electronic device. Furthermore, the first wiring harness disposed between the electronic control unit and the joint connector can be standardized even if the option electronic device connected to the joint connector is changed. In addition, the standard wiring harness disposed between the joint connector and the standard electronic device can be standardized even if the option electronic device connected to the joint connector is changed. For the above reasons, the electronic control unit can be standardized without substantial change in the number of the electric wires, even if the combination of the electronic devices to be mounted in the vehicle is changed.

In accordance with the Invention, the option driver can be easily mounted. When the option driver is disposed over the option wiring harness or inside the option electronic device, the option wiring harness separately needs a signal wire transmitting a control signal for the option driver in addition to the option electrical wire and the option ground wire. In comparison to the above configuration, when the joint connector is incorporated in the option driver, the signal wire is not needed for the option wiring harness, thereby decreasing the number of the electrical wires needed for the option wiring harness.

In accordance with the Invention, the option driver is not needed to be incorporated in the joint connector, thereby downsizing the joint connector.

### [Brief Description of Drawings]

Fig. 1 depicts an electronic control system in which an example of a wiring harness assembly and not the invention is incorporated;
Fig. 2 is a perspective view of a relay connector shown in Fig. 1;
Fig. 3 is a circuit diagram of a control circuit which is enclosed and sealed in an envelope as shown in Fig. 2;
Fig. 4 depicts an electronic control system in which a wiring harness assembly in accordance with the invention is incorporated; and
Fig. 5 depicts an exemplary conventional electronic control system.

### [Description of Embodiments]

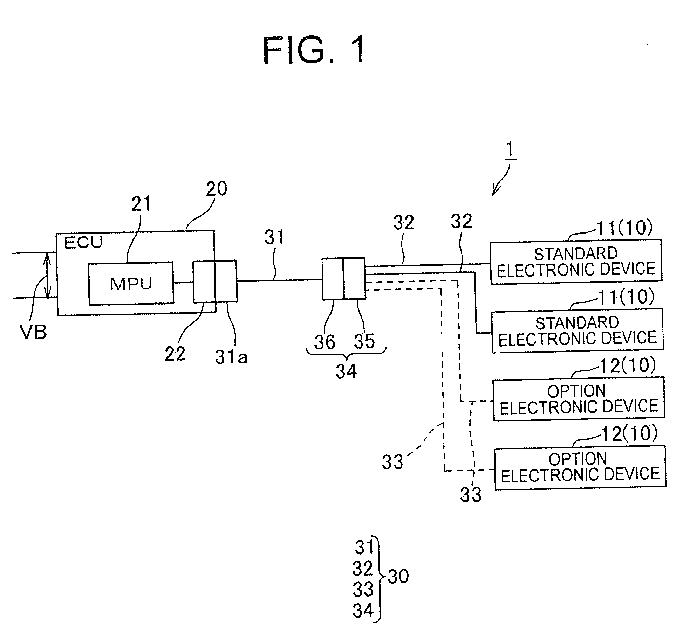

### Figures 1-3 are not related to the inventions according to claims 1-2 and are merely illustrations of reference examples.

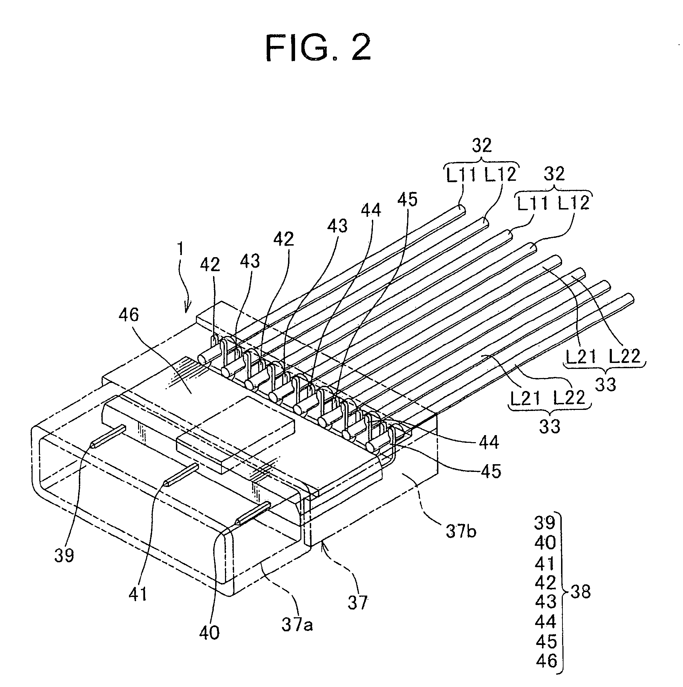

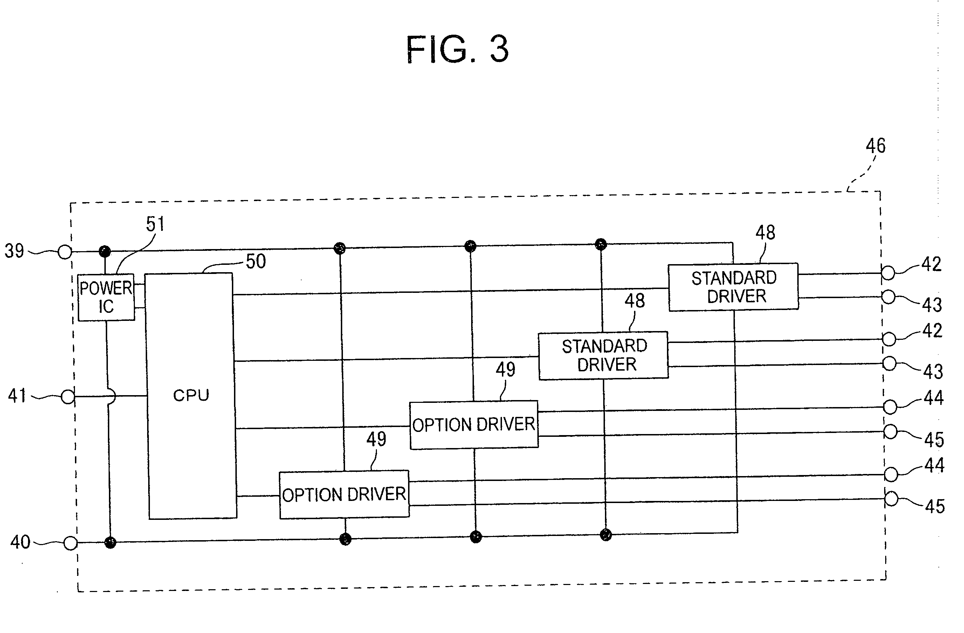

A first Example of a wiring harness assembly and electronic control system are hereinafter described with reference to Figs. 1-3. Fig. 1 depicts an electronic control system in which a first embodiment of a wiring harness assembly which is not the invention is incorporated. Fig. 2 is a perspective view of a relay connector as shown in Fig. 1. Fig. 3 is a circuit diagram of a control circuit which is enclosed and sealed in an envelope of Fig. 2
Referring to Fig. 1, an electronic control system 1 is mounted in a vehicle (not shown).

The electronic control system 1 includes a plurality of electronic devices 10, an electronic control unit (i.e. , ECU) 20 configured to control the plurality of electronic devices 10, and a wiring harness 30 configured to communicatively connect the plurality of electronic devices 10 and the ECU 20.

The plurality of electronic devices 10 corresponds to a variety of devices which are controlled by the ECU 20, and is divided into two categories, a standard electronic device 11 which is necessarily mounted in a vehicle and an option electronic device 12 which is optionally mounted in the vehicle. The standard electronic device 11 may include a door key control unit, and a power window. The option electronic device 12 may include a door mirror switching device, a door mirror control device, and a door mirror anti-fog device. While the electronic devices 10 are mentioned above in relation to the electronic devices disposed adjacent to the vehicle door, a wide variety of electronic devices 10 other than the afore-mentioned electronic devices may be also mounted in the vehicle.

Power-supply voltage VB is supplied from a battery to the ECU 20. The ECU 20 includes a microprocessor (i.e., MPU) 21 for controlling the overall of the electronic control system 1, and an external connector 22 connected to, for example, a wiring harness assembly 30 which will be described below in detail.

The MPU 21 is connected to an operating switch for each electronic device 10 (not shown). As such, control signal is delivered to the associated electronic device in response to the input of the associated operating switch.

The external connector 22 is connected to the MPU 21. The external connector 22 has a communication interface associated with a desired communication protocol and etc. for performing multiple communication with the plurality of electronic devices 10. The desired communication protocol may be, for example, Local Interconnect Network (i.e., LIN). Furthermore, the external connector 22 includes a power-supply terminal at which (+) side of the power-supply voltage VB is output, a ground terminal at which (-) side of the power-supply voltage VB is output, and a signal terminal at which control signal connected to the communication interface is output. For reference, the power terminal, the ground terminal, and the signal terminal are not shown.

The wiring harness assembly 30 includes a first wiring harness 31, a plurality of standard wiring harnesses 32, and a plurality of option wiring harnesses 33, and a joint connector (i.e., J/C) 34. The first wiring harness 31 includes a power wire connected to the power-supply terminal of the external connector 22, a ground wire connected to the ground terminal of the external connector 22, and a signal wire which is connected to the signal terminal of the external connector 22 and in which control signal directed to each electronic device 10 is multiply (i.e., serially)-delivered. For reference, the power wire, the ground wire, and the signal wire are not shown.

One end portion of the first wiring harness 31 has a connection connector 31a. Once the connection connector 31a is connected to the external connector 22, the power-supply terminal of the external connector 22 is connected to the power wire, the ground terminal is connected to the ground wire, and the signal terminal is connected to the signal wire. Furthermore, an opposite end portion of the first wiring harness 31 is coupled to the J/C 34, which will be described below in detail.

Referring to Fig. 2, each of the plurality of standard wiring harnesses 32 includes a standard power wire L11 and a standard ground wire L12, connected to the standard electronic device 11. Each of the plurality of option wiring harnesses 33 includes an option power wire L21 and an option ground wire L22, connected to the option electronic device 12.

With reference to Fig. 1, the J/C 34 is configured to connect the first wiring harness 31 to the standard wiring harness 32 and the option wiring harness 33. The J/C 34 includes a relay connector 35 coupled to the end portions of both the standard wiring harness 32 and the option wiring harness 33, and a connector 36 coupled to the end portion of the first wiring harness 31. The relay connector 35 and the connector 36 are coupled to each other via a connector.

Referring to Fig. 2, the relay connector 35 includes an outer housing 37, and a control circuit package 38 received in the outer housing 37. As shown in Fig. 2, the outer housing 37 is a flattened box-shaped, and formed of insulating synthetic resin. The outer housing 37 integrally includes a tube-shaped hood portion 37a, and a control circuit package-receiving chamber 37b in communication with the hood portion 37a.

Referring to Fig. 2, the control circuit package 38 includes a power terminal fitting 39, a ground terminal fitting 40 and a signal terminal fitting 41 respectively connected to the power wire (not shown), the ground wire (not shown), and the signal wire (not shown) which at least partly define or form the first wiring harness 31; a standard power terminal fitting 42 and a standard ground terminal fitting 43 respectively connected to the standard power wire L11 and the standard ground wire L12 which at least partly define or form the standard wiring harness 32; an option power terminal fitting 44 and an option ground terminal fitting 45 respectively connected to the option power wire L21 and the option ground wire L22 which at least partly define or forms the option wiring harness 33; and an envelope 46.

The power terminal fitting 39, the ground terminal fitting 40 and the signal terminal fitting 41 are formed of conductive metal such that one end portions thereof are inserted into the envelope 46, and the opposite end portions thereof externally extend through one of a pair of opposed surfaces of the envelope 46. Furthermore, each of the opposite end portions of these terminal fittings 39, 40, and 41 has a male tab terminal, which is received in the hood portion 37a of the outer housing 37.

Once the connector 36 coupled to the terminal of the first wiring harness 31 is brought into a fitting engagement with the male tab terminal formed in the opposite end portions of the terminal fittings 39-41, the male tab terminal is electrically connected to a female terminal fitting (not shown) disposed inside the connector 36. As a result, the power wire (not shown), the ground wire (not shown), and the signal wire (not shown) of the first wiring harness 31 are respectively connected to the power terminal fitting 39, the ground terminal fitting 40, and the signal terminal fitting 41.

The standard power terminal fitting 42, the standard ground terminal fitting 43, the option power terminal fitting 44, and the option ground terminal fitting 45 are formed of conductive metal such that one end portions thereof are inserted into the envelope 46, and the opposite end portions thereof externally extend through one of a pair of opposed surfaces of the envelope 46. Furthermore, each of the opposite end portions of these standard power terminal fitting 42 and standard ground terminal fitting 43 has an insulation displacement terminal. The standard power wire L11 and the standard ground wire L12 of the standard wiring harness 32 are crimped or pressed against the insulation displacement terminal. In addition, each of the opposite end portions of the option power terminal fitting 44 and the option ground terminal fitting 45 also has an insulation displacement terminal, against which the option power wire L21 and the option ground wire L22 of the option wiring harness 33 are crimped or pressed.

In the envelope 46, a chip (not shown) incorporating the control circuit as shown in Fig. 3 therein is connected to the one end portions of the afore-mentioned terminal fittings 39-45 via wire bonding. In this state, the envelope 46 is sealed by resin. Referring to Fig. 3, the chip disposed inside the envelope 46 includes a standard driver 48, an option driver 49, CPU 50 as a control unit, and a power IC 51.

The standard driver 48 may include a switching element (not shown), which is on-off controlled by the CPU 50 disposed over, for example, a connecting line connecting the power terminal fitting 39 and the standard power terminal fitting 42, and a connecting line connecting the ground terminal fitting 40 and the standard ground terminal fitting 43.

The standard driver 48 is configured to apply driving voltage between the standard power terminal fitting 42 and the standard ground terminal fitting 43 so as to provide the standard electronic device 11 with the driving voltage thereby driving the standard electronic device 11, or block the driving voltage applied between the standard power terminal fitting 42 and the standard ground terminal fitting 43 so as to block the driving voltage supplied to the standard electronic device 11 thereby stopping the driving of the standard electronic device 11, in response to the control from the CPU 50.

The option driver 49 may include a switching element (not shown), which is on-off controlled by the CPU 50 disposed over, for example, a connecting line connecting the power terminal fitting 39 and the option power terminal fitting 44, and a connecting line connecting the ground terminal fitting 40 and the option ground terminal fitting 45.

The standard driver 49 is configured to apply driving voltage between the option power terminal fitting 44 and the option ground terminal fitting 45 so as to provide the option electronic device 12 with the driving voltage thereby driving the option electronic device 12, or block the driving voltage applied between the option power terminal fitting 44 and the option ground terminal fitting 45 so as to block the driving voltage supplied to the option electronic device 12 thereby stopping the driving of the option electronic device 12, in response to the control from the CPU 50. The driving voltage may be the afore-mentioned power-supply voltage VB itself, or a voltage which is obtained by elevating or lowering the afore-mentioned power-supply voltage VB.

The CPU 50 is operated by the supply of power from the power IC 51 which will be described below. Furthermore, the CPU 50 is connected to the standard driver 48 and the option driver 49 so as to control the driving of the driver 48 and the driver 49, which corresponds to the operating switch in accordance with the control signal delivered via the signal terminal fitting 41.

The power IC 51 is connected to the power terminal fitting 39 and the ground terminal fitting 40 so as to generate power for the CPU 50 from the power-supply voltage VB applied between the power terminal fitting 39 and the ground terminal fitting 40 and to supply the power for the CPU 50 into the CPU 50.

Next, the operation of the afore-mentioned electronic control system 1 will be described. When an ignition switch is ON, the power-supply voltage VB is supplied from the battery to the ECU 20. As a result, the ECU 20 is started up. Furthermore, the power-supply voltage VB supplied from the battery is supplied via the first wiring harness 31 to the CPU 50 disposed inside the relay connector 36, thereby starting up the CPU 50.

When the MPU 21 disposed inside the ECU 20 detects the operation of the operating switch corresponding to the electronic device 10 (not shown), it transmits the control signal directed to the associated operating switch via the signal wire of the first wiring harness 31 to the CPU 50 disposed inside the relay connector 36. The MPU 21 disposed inside the ECU 20 and the CPU 50 disposed inside the relay connector 36 are connected by a single signal wire, and the MPU 21 multiply (i.e., serially) transmits the control signal of the operating switch directed to the associated electronic device 10 via the single signal wire. When the CPU 50 receives the control signal transmitted from the MPU 21, the drivers 48 and 49 corresponding to the associated operating switch to which the control signal is directed are controlled, thereby allowing the driving of the associated electronic device 10 corresponding to the operating switch to be controlled.

In accordance with the afore-mentioned electronic control unit 1, the wiring harness assembly 30 includes the first wiring harness 31 connected to the ECU 20, the standard wiring harness 32 connected to the standard electronic device 11, the option wiring harness 33 connected to the option electronic device 12, and the J/C 34 making a connection between the first wiring harness 31 and the standard and option wiring harnesses 32, 33. The CPU 50 is incorporated in the J/C 34 to control the associated electronic device 10 connected thereto via the standard wiring harness 32 and the option wiring harness 33 in accordance with the control signal for each electronic device 10 multiply-transmitted from the ECU 20 via the first wiring harness 31.

In the above configuration, the external connector 22, which corresponds to the input and output portion of the ECU 20, can be standardized even if the number of the option electronic devices 12 is changed. Furthermore, the first wiring harness 31 disposed between the ECU 20 and the J/C 34 can be standardized even if the option electronic device 12 connected to the J/C 34 is changed. In addition, the standard wiring harness 32 disposed between the J/C 34 and the standard electronic device 11 can be standardized even if the option electronic device 12 connected to the J/C 34 is changed. For the above reasons, the ECU 20 can be standardized without substantial change in the number of the electric wires, even if the combination of the electronic devices 10 to be mounted in the vehicle is changed.

In accordance with the afore-mentioned electronic control system 1, the option driver 49 is incorporated in the J/C 34. For the reason, the option driver 49 can be easily mounted. When the option driver 49 is disposed over the option wiring harness 33 or inside the option electronic device 12, the option wiring harness 33 separately needs a signal wire transmitting a control signal for the option driver 49 in addition to the option electrical wire L21 and the option ground wire L22. In comparison to the above configuration, when the J/C 34 is incorporated in the option driver 49, the signal wire is not needed for the option wiring harness 33, thereby decreasing the number of the electrical wires needed for the option wiring harness 33.

### Second embodiment

Next, an embodiment of the wiring harness assembly in accordance with the invention and the electronic control system provided with the same wiring harness assembly are described with reference to Fig. 4. Fig. 4 depicts an electronic control system in which the embodiment of a wiring harness assembly in accordance with the invention is incorporated. In Fig. 4, the same reference numeral(s) may be imparted to the same elements as illustrated in Figs. 1-3 with respect to the first embodiment of the invention, and the detailed descriptions thereof may be omitted. The embodiment is different from the Example in Fig. 1 in terms of the position of the option driver 49. While in the Example, the option driver 49 is incorporated into the J/C 34, the option driver 49 is disposed over the option wiring harness 33 in accordance with the embodiment.

In this case, the option wiring harness 33 disposed between the J/C 34 and the option driver 49 separately needs a signal wire transmitting a control signal for the option driver 49 in addition to the option electrical wire L21 and the option ground wire L22. In accordance with the embodiment of the invention, the option driver 49 is not needed to be incorporated in the J/C 34, thereby downsizing the J/C 34.

### [Reference Sign]

- 1: electronic control system
- 10: electronic device
- 11: standard electronic device
- 12: option electronic device
- 20: ECU (electronic control unit)
- 30: wiring harness assembly
- 31: first wiring harness
- 32: standard wiring harness
- 33: option wiring harness
- 34: J/C (joint connector)

## Claims

1. A wiring harness assembly (30), communicatively connecting a plurality of electronic devices (10) to be mounted in a vehicle and an electronic control unit (20) for controlling the plurality of electronic devices (10), the wiring harness assembly (30) comprising:
a first wiring harness (31) connected to the electronic control unit (20);
a standard wiring harness (32) connected to a standard electronic device (11) which is necessarily mounted in the vehicle among the plurality of electronic devices (10);
an option wiring harness (33) connected to an option electronic device (12) which is optionally mounted to the vehicle among the plurality of electronic devices (10);
a joint connector (34) making a connection between the first wiring harness (31) and the standard and option wiring harnesses (32, 33);
a control device disposed inside the joint connector (34), and configured to control each electronic device (10) connected thereto via the standard wiring harness (32) and the option wiring harness (33) in dependence on control signal for each electronic device (10) which is multiply transmitted from the electronic control device (20) via the first wiring harness (31);
a standard driver (48) disposed inside the joint connector (34), and being configured to supply electric power to the standard electronic device (11), which is controlled by the control device, so as to drive the standard electronic device (11); and
an option driver (49) disposed over the option wiring harness (33) and being configured to supply electric power to the option electronic device (12) so as to drive the option electronic device (12) in response to the received control signal for the option electronic device (12).

2. An electronic control system (1), comprising:
a plurality of electronic devices (10) to be mounted in a vehicle;
an electronic control unit (20) for controlling the plurality of electronic devices (10); and
a wiring harness assembly (30) in accordance with claim 1.

## Patentansprüche

1. Eine Kabelbaumstruktur (30), die kommunikativ eine Vielzahl von elektronischen Geräten (10) verbindet, die in einem Fahrzeug zu montieren sind und eine elektronische Steuereinheit (20) zum Steuern der Vielzahl von elektronischen Geräten (10), die Kabelbaumstruktur (30) weist auf:
einen ersten Kabelbaum (31), der mit der elektronischen Steuereinheit (20) verbunden ist,
einen Standard-Kabelbaum (32), der mit einem Standard-Elektronikgerät (11) verbunden ist, das notwendigerweise in dem Fahrzeug mit der Vielzahl von elektronischen Geräten (10) montiert ist,
einen optionalen Kabelbaum (33), der mit einem optionalen-Elektronikgerät (12) verbunden ist, das optional in dem Fahrzeug mit der Vielzahl von elektronischen Geräten (10) montiert ist,
einen gemeinsamen Verbinder (34), der eine Verbindung mit dem ersten Kabelbaum (31) und den Standard- und optionalen Kabelbäumen (32, 33) herstellt,
ein Steuergerät, das innerhalb des gemeinsamen Verbinders (34) vorgesehen ist und konfiguriert ist, um jedes elektronische Gerät (10) zu steuern, das mit diesem über ein Standard-Kabelbaum (32) und optionalen Kabelbaum (33) verbunden ist in Abhängigkeit von einem Steuersignal für jedes elektronische Gerät (10) das mehrfach von der elektronischen Steuereinheit (20) über den ersten Kabelbaum (31) übertragen wird,
einen Standard-Treiber (48), der innerhalb des gemeinsamen Verbinders (34) vorgesehen ist und konfiguriert ist, um elektrische Energie zu dem Standard-Elektronikgerät (11) zu liefern, welches von dem Steuergerät gesteuert wird, um das Standard-Elektronikgerät (11) zu treiben, und
einen optionalen Treiber (49), der über den optionalen Kabelbaum (33) vorgesehen ist und konfiguriert ist, um elektrische Energie zu dem optionalen-Elektronikgerät (12) zu liefern, um somit das optionale-Elektronikgerät (12) in Antwort auf das empfangene Steuersignal für das optionale-Elektronikgerät (12) zu treiben.

2. Ein elektronisches Steuersystem (1), aufweisend:
eine Vielzahl von elektronischen Geräten (10), die in einem Fahrzeug zu montieren sind,
eine elektronische Steuereinheit (20) zum Steuern der Vielzahl von elektronischen Geräten (10), und
eine Kabelbaumstruktur (30) in Übereinstimmung mit Anspruch 1.

## Revendications

1. Structure de faisceau de câbles (30), mettant une pluralité de dispositifs électroniques (10) à monter sur un véhicule et une unité de commande électronique (20) contrôlant la pluralité de dispositifs électroniques (10) en communication, la structure de faisceau de câbles (30) comprenant :
un premier faisceau de câbles (31) connecté à l'unité de commande électronique (20) ;
un faisceau de câbles standard (32) connecté à un dispositif électronique standard (11), ce dernier étant obligatoirement monté sur le véhicule parmi la pluralité de dispositifs électroniques (10) ;
un faisceau de câbles optionnel (33) connecté à un dispositif électronique optionnel (12), ce dernier étant monté de façon optionnelle sur le véhicule parmi la pluralité de dispositifs électroniques (10) ;
un connecteur de jonction (34) connectant le premier faisceau de câbles (31) aux faisceaux de câbles standard et optionnel (32, 33) ;
un dispositif de commande situé à l'intérieur du connecteur de jonction (34), et configuré de manière à commander chaque dispositif électronique (10) qui lui est connecté via le faisceau de câbles standard (32) et le faisceau de câbles optionnel (33) en fonction du signal de commande pour chaque dispositif électronique (10) qui est transmis de manière multiple à partir du dispositif électronique de commande (20) via le premier faisceau de câbles (31) ;
un pilote standard (48) situé à l'intérieur du connecteur de jonction (34), et étant configuré pour fournir de l'électricité au dispositif électronique standard (11), ce dernier étant commandé par le dispositif de commande, de manière à actionner le dispositif électronique standard (11) ; et un pilote optionnel (49) situé sur le faisceau de câbles optionnel (33) et étant configuré pour fournir de l'électricité au dispositif électronique optionnel (12), de manière à actionner le dispositif électronique optionnel (12) en réponse au signal de commande reçu pour le dispositif électronique optionnel (12).

2. Système de commande électronique (1), comprenant :
une pluralité de dispositifs électroniques (10) à monter sur un véhicule ;
une unité de commande électronique (20) permettant de commander la pluralité de dispositifs électroniques (10) ; et une structure de faisceau de câbles (30) conforme à la revendication 1.
